# EUROPEAN PATENT APPLICATION

(11) **EP 2 913 703 A1**
(43) Date of publication of application: **02.09.2015**
(21) Application number: 15157042.1
(22) Date of filing: 27.02.2015
(51) Int. Cl.: G02C 7/04

(54) **Contact lenses with apparent motion and other optical effects**

(30) Priority: 28.02.2014 US 201414193489
(71) Applicant: Johnson & Johnson Vision Care, Inc., Jacksonville, FL 32256 (US)
(72) Inventor: Caldarise, Salvatore G., St. Johns, FL 32259 (US)
(74) Representative: Carpmaels & Ransford LLP

(57) **Abstract**

Static images or patterns may be incorporated into one or more regions of a cosmetic contact lens to achieve a new dimensional effect; namely, the appearance or illusion of motion. More particularly, repeated asymmetric patterns with the appropriate contrast and luminance incorporated into one or more regions of the contact lens will result in the one or more regions providing the appearance of motion. Other optical or visual illusions may also be incorporated into a cosmetic contact lens.

## Description

### BACKGROUND OF THE INVENTION

### 1. Field of the Invention

The present invention relates to ophthalmic lenses, and more particularly to contact lenses incorporating static patterns that when viewed by an observer create the illusion of apparent motion. The illusion of apparent motion may draw an observer's attention to or from a particular area and create an intriguing look. Alternative contact lenses may comprise images creating other optical illusions or visual effects other than the illusion of apparent motion.

### 2. Discussion of the Related Art

Contact lenses or contacts are simply lenses placed on the eye. Contact lenses are considered medical devices and may be worn to correct vision and/or for cosmetic or other therapeutic reasons. Contact lenses have been utilized commercially to improve vision since the 1950s. Early contact lenses made or fabricated from hard materials were relatively expensive and fragile. In addition, these early contact lenses were fabricated from materials that did not allow sufficient oxygen transmission through the contact lens to the conjunctiva and cornea which potentially could cause a number of adverse clinical effects. Although these contact lenses are still utilized, they are not suitable for all patients due to their poor initial comfort. Later developments in the field gave rise to soft contact lenses, based upon hydrogels, which are extremely popular and widely utilized today. Silicone hydrogel contact lenses that are available today combine the benefit of silicone, which has extremely high oxygen permeability, with the proven comfort and clinical performance of hydrogels. Essentially, these silicone hydrogel based contact lenses have higher oxygen permeability values and are generally more comfortable to wear than the contact lenses made of the earlier hard materials. Rigid gas permeable hard contact lenses, on the other hand, are made from siloxane-containing polymers but are more rigid than soft contact lenses and thus hold their shape and are more durable.

Currently available contact lenses remain a cost effective means for vision correction. The thin plastic lenses fit over the cornea of the eye to correct vision defects, including myopia or nearsightedness, hyperopia or farsightedness, astigmatism, i.e. asphericity in the cornea, and presbyopia i.e. the loss of the ability of the crystalline lens to accommodate. Contact lenses are available in a variety of forms and are made of a variety of materials to provide different functionality. Daily wear soft contact lenses are typically made from soft polymer materials combined with water for oxygen permeability. Daily wear soft contact lenses may be daily disposable or extended wear disposable. Daily disposable contact lenses are usually worn for a single day and then thrown away, while extended wear disposable contact lenses are usually worn for a period of up to thirty days. Bifocal and multifocal contact lenses are designed specifically for patients with presbyopia and are available in both soft and rigid varieties. Toric contact lenses are designed specifically for patients with astigmatism and are also available in both soft and rigid varieties. Combination lenses combining different aspects of the above are also available, for example, hybrid contact lenses. Colored soft contact lenses use different materials to provide different functionality. For example, a visibility tint contact lens uses a light tint to aid the wearer in locating a dropped contact lens, enhancement tint contact lenses have a transparent or translucent tint that is meant to enhance one's natural eye color, the color tint contact lens comprises an opaque tint meant to change one's eye color, and the light filtering tint contact lens functions to enhance certain colors while muting others.

As set forth above, the use of tinted or colored contact lenses to either or both alter the natural color of the iris and to mask ophthalmic abnormalities is well known. Typically, these contact lenses use either or both opaque and translucent colors to change the color on an iris, for example, from brown to blue. Contact lenses or more specifically, cosmetic contact lenses may include additional pattern elements that partially or completely overlie the wearer's iris. Other cosmetic contact lenses focus on the sclera rather than or in addition to the iris. For example, a contact lens may comprise a brightly colored peripheral portion, i.e. outside of the iris region, that may be opaque, semi-opaque and/or translucent. The bright portion may extend from the edge of the limbus to the edge of the contact lens creating the impression of a brighter or whiter sclera. These cosmetic contact lenses may include a limbal ring which may make the iris appear larger, darker and/or more defined than it would otherwise. A limbal ring is essentially an annular band of color incorporated into the contact lens that, when the lens is on the eye and centered, partially or completely overlies the lens wearer's limbal region which is the junction of the sclera and the cornea. The various components that may comprise a cosmetic lens, as briefly described above, may be utilized alone or in combination to create various effects. In addition, it is important to note that although a contact lens may be classified as a cosmetic lens, this does not preclude the lens comprising vision correcting elements.

While various effects may be achieved through the use of colors and patterns to enhance eye appearance, there exists a need for cosmetic contact lenses that are able to add a new dimension; namely, that of the optical illusion of apparent motion or other optical illusions, thereby creating an entirely new look which has not been utilized in the contact lens industry. Although motion or moving images within a contact lens may be achieved by providing power to the lens to activate a pattern or image, the use of static images to provide the illusion or appearance of motion is significantly more desirable and cost effective.

### SUMMARY OF THE INVENTION

The contact lenses with apparent motion overcome the need briefly set forth above.

In accordance with one aspect, the present invention is directed to a contact lens. The contact lens comprising a center region, a central portion surrounding the center region, a peripheral portion surrounding the central portion, and an image incorporated into the contact lens in at least a portion of at least one of the central portion and the peripheral portion, the image constructed to create a dynamic visual illusion in the mind of an observer gazing at a wearer of the contact lens.

In accordance with another aspect, the present invention is directed to a contact lens. The contact lens comprising a center region, a central portion surrounding the center region, a peripheral portion surrounding the central portion, and a pattern on or within the contact lens in at least a portion of at least one of the central portion and the peripheral portion, wherein the pattern comprises a grid of dark geometric shapes and light spaces between the geometric shapes.

In accordance with still another aspect, the present invention is directed to a contact lens. The contact lens comprising a center region, a central portion surrounding the center region, a peripheral portion surrounding the central portion, and an image incorporated into the contact lens in at least a portion of at least one of the central portion and the peripheral portion, the image comprising a repeated asymmetric pattern.

Cosmetic contact lenses may be designed to alter the appearance of the eyes upon which they are worn in any number of ways, including the color of the entire eye and/or different regions of the eye. While not a requirement, cosmetic contact lenses may also be utilized to correct refractive error. Cosmetic contact lenses may also have a direct medical application. For example, cosmetic contact lenses may be utilized to restore the appearance of a damaged eye. Cosmetic contact lenses may include transparent, translucent, opaque-color enhancements or tints. Tints may include organic/inorganic pigments, dyes or special effect pigments. Printed regions on the contact lens may include the iris region (iris patterns), the limbal region (limbal rings), the scleral region (sclera brightening), or any combination thereof. In addition, patterns may be continuous, intermittent or any combination thereof.

There has been and there continues to be a significant amount of activity surrounding the creation of new effects for incorporation into contact lenses. Examples of such include the creation of a depth effect, making the eyes or certain portions of the eyes appear larger, making the eyes or portions of the eyes more vibrant, giving the eyes or portions of the eyes a brighter, wetter and/or shinier appearance, and simply changing the color of the eyes. The present invention; however, is directed to the creation of a dynamic effect, i. e. motion or moving images, through the use of a static image. The static image in this instance is a visual or optical illusion.

A visual illusion or an optical illusion is characterized by visually perceived images that differ from objective reality. The information gathered by the eye is processed in the brain to give a perception that does not tally with a physical measurement of the stimulus source. There are three main types of optical illusions; namely, literal optical illusions that create images that are different from the objects that make them, physiological optical illusions that are the effects on the eyes and brain of excessive stimulation of a specific type, for example, brightness, color, size, position, tilt and movement, and cognitive optical illusions which are the result of unconscious inferences.

An individual's eyes and brain work in concert to produce the image we ultimately interpret. By modifying contrast and luminance levels of component shapes and creating a pattern using these component shapes, it is possible to produce static images that when viewed have the appearance of motion, an optical illusion. By incorporating such images into contact lenses, one may produce images which appear to be moving to an observer simply by the nature of the image, thereby creating an intriguing effect for the observer while not affecting the image quality of the wearer of the contact lens having such images incorporated therein.

The incorporation of the static images responsible for the illusion of movement is no different from the incorporation of any other type of effect layer or layers in a cosmetic contact lens and thus will have no impact on manufacturing costs. In addition, as these designs are incorporated outside of the optic zone, there is no impact on visual acuity. Accordingly, novel apparent dynamic visual effects may add a new dimension to cosmetic contact lenses without any significant impact on manufacturing cost or complexity. Dynamic visual effects include apparent motion as well as other optical illusions, for example, appearing and disappearing elements.

### BRIEF DESCRIPTION OF THE DRAWINGS

The foregoing and other features and advantages of the invention will be apparent from the following, more particular description of preferred embodiments of the invention, as illustrated in the accompanying drawings.
Figure 1 is a plan view of an exemplary non-cosmetic contact lens.
Figure 2 is a plan view of a first exemplary cosmetic contact lens.
Figure 3 is a plan view of a first exemplary static image of a repeating asymmetric pattern capable of creating the illusion of motion in accordance with the present invention.
Figure 4 is a plan view of a second exemplary static image of a repeating asymmetric pattern capable of creating the illusion of motion in accordance with the present invention.
Figure 5 is a plan view of a first exemplary image with appearing/disappearing elements in accordance with the present invention.
Figure 6 is a diagrammatic representation of a generalized pad printing process for manufacturing cosmetic contact lenses.
Figure 7 is a diagrammatic representation of a more detailed pad printing process for manufacturing cosmetic contact lenses.

### DETAILED DESCRIPTION OF THE PREFERRED EMBODIMENTS

Contact lenses or contacts are simply lenses placed on the eye. Contact lenses are considered medical devices and may be worn to correct vision and/or for cosmetic or other therapeutic reasons. Contact lenses have been utilized commercially to improve vision since the 1950s. Early contact lenses made or fabricated from hard materials were relatively expensive and fragile. In addition, these early contact lenses were fabricated from materials that did not allow sufficient oxygen transmission through the contact lens to the conjunctiva and cornea which potentially could cause a number of adverse clinical effects. Although these contact lenses are still utilized, they are not suitable for all patients due to their poor initial comfort. Later developments in the field gave rise to soft contact lenses, based upon hydrogels, which are extremely popular and widely utilized today. Silicone hydrogel contact lenses that are available today combine the benefit of silicone, which has extremely high oxygen permeability, with the proven comfort and clinical performance of hydrogels. Essentially, these silicone hydrogel based contact lenses have higher oxygen permeabilities and are generally more comfortable to wear than the contact lenses made of the earlier hard materials.

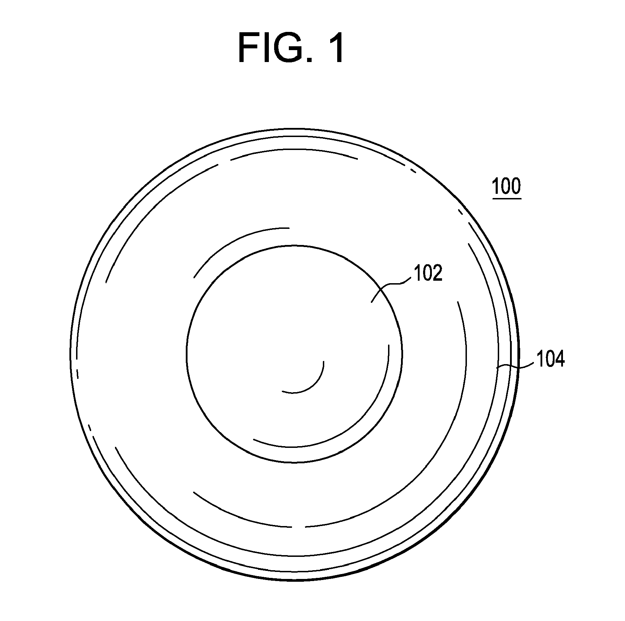

Referring now to Figure 1, there is illustrated a plan view of an exemplary non-cosmetic contact lens 100. The contact lens 100 comprises an optic zone 102, a peripheral zone 104 surrounding the optic zone 102, a back curve surface designed to make contact with the corneal surface of an individual's eye when worn and a front curve surface opposite the back curve surface. The optic zone 102 is the portion of the contact lens 100 through which vision correction may be obtained. In other words, the optic zone 102 provides vision correction and is designed for a specific need such as single vision myopia or hyperopia correction, astigmatism vision correction, bi-focal vision correction, multi-focal vision correction, custom correction or any other design that may provide vision correction. The peripheral zone 104 surrounds the optic zone 102 and provides mechanical stability for the contact lens 100 on the eye. In other words, the peripheral zone 104 provides mechanical features which influence positioning and stabilization of the contact lens 100 on the eye, including centration and orientation. Orientation is fundamental when the optic zone 102 includes non-rotationally symmetric features, such as astigmatic correction and/or high order aberration correction. In some contact lens designs, an optional intermediate zone between the optic zone 102 and the peripheral zone 104 may be utilized. The optional intermediate zone ensures that the optic zone 102 and the peripheral zone 104 are smoothly blended.

The lens 100 illustrated in Figure 1 is circular, but may be any convenient shape for a contact lens, such as an elliptical or truncated circular shape. In addition to the lens being round or non-round, the peripheral edge of the contact lens 100 may be planar or non-planar.

A cosmetic contact lens is designed to enhance or alter the appearance of the eye upon which it is worn. While not a requirement, cosmetic contact lenses may also be utilized for the correction of refractive error. In addition, cosmetic contact lenses may also have direct medical application, for example, to restore the appearance of a damaged eye. Individuals who suffer from aniridia, the absence of an iris, or dyscoria, damage of the iris, may utilize colored contact lenses that will give the appearance of a complete iris. Cosmetic contact lenses may include translucent/transparent color enhancement, tint, opaque color tint, artificial iris patterns, limbal rings, sclera brightening tints and/or any combination of the above.

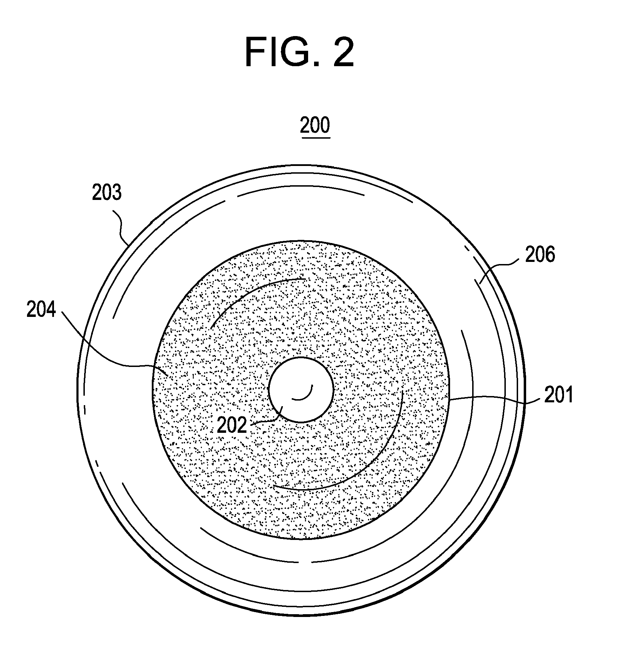

Referring to Figure 2, there is illustrated a first exemplary cosmetic contact lens 200. While this lens 200 comprises an optic zone and a peripheral zone within the meaning set forth above with respect to the contact lens 100 of Figure 1, different terms are utilized to describe the various regions of a cosmetic contact lens. The cosmetic contact lens 200 comprises a center region 202 that is sized to substantially correspond to the size and location of an individual pupil. The center region 202 typically has no coloring or design so as not to interfere with or degrade visual acuity. A central portion 204 surrounds the center region 202 and is sized to substantially correspond to the size and location of an individual's iris. The central portion 204 may comprise one or more colors and/or a pattern formed by one or more colors to enhance the appearance of the wearer's iris. Disposed about the central portion 204 and extending to the surrounding edge of the contact lens 200 is a peripheral portion 206. The peripheral portion 206 comprises an annular shape with an inner diameter measured from point 201 and an outer diameter measured from point 203 which may, but need not necessarily coincide with the outer edge of the contact lens 200 as a whole. The peripheral portion 206 may be colored with a bright color, for example, white, near white, off white, light yellow, pale blue, light pink, light green or any combination of the above. The bright colors are disposed so as to blend gradually with the wearer's sclera. A limbal ring, which as set forth above, is an annular band in a particular color, that may be positioned proximate diameter marker point 201.

The peripheral portion 206 is colored to enhance the appearance of the sclera. The coloring of the peripheral portion 206 may be opaque, translucent, or somewhere between the two, or semi-opaque. Exemplary embodiments enhance the appearance of the sclera by providing the sclera with a refreshed, natural appearance. Opaque as utilized herein shall be understood to mean a color that permits an average light transmittance in the 380 to 780 nm range of 0 to about 50 percent, and preferably 7 to about 50 percent. Translucent as utilized herein shall be understood to mean a color that permits an average light transmittance in the 380 to 780 nm range of about 50 to about 85 percent, and preferably from about 65 to about 85 percent.

In considering the human visual system, most people immediately think about the eyes and the constituent parts, such as the cornea, pupil, crystalline lens, the vitreous humor, and the retina with the rods and cones. However, the human visual system also includes neural processing that enables image interpretation and understanding. Such neural processing generally occurs automatically, without any conscious consideration by the observer. For example, the images formed on the retina of each eye are upside down, but the visual system automatically corrects this to view the image in the proper orientation. As another example regarding the rods and cones of the retina, the ratios of the number of short or blue cones, the number of medium or green cones, and the number of long or red cones varies widely among individuals, as does the organization of these cones within the retina, whether randomly dispersed or clustered. The green cones are also much more light-sensitive than the red or blue cones. Yet, by and large, most people perceive the various color shades in a sufficiently comparable way that individuals can agree upon the colors present in any given scene.

The structure and response attributes of the human visual system impact perception, for example, in cinema, the temporal processing limits allow people to perceive continuous motion from a series of still frame images presented at thirty (30) frames/second. By comparison, human perception of optical illusions exploit gaps or expectations in our automatic cognitive visual system, such that we can perceive visual content or sensations within the image content which is often not actually present in the content itself. An optical illusion is characterized by the visual perception of image content that differ from objective reality. The information gathered by the eye is processed in the brain to give a perception that does not completely correlate with a physical measurement of the stimulus source or image. Certainly, the perception of optical illusions varies on an individual basis, depending on visual sensitivity and impairments (such as color blindness). The perception of optical illusion may also depend on age and cultural influences.

In accordance with the present invention, static images may be incorporated into one or more locations in or on a contact lens, and preferably in the central portion 204 and/or the peripheral portion 206 (Figure 2) to create the illusion of movement or apparent dynamic visual effects. These effects may add a new dimension to cosmetic contact lenses. In particular, while observers, i. e. individuals viewing the wearer of such a cosmetic contact lens, tend to overcome the illusion in approximately six seconds, the illusion returns when the observer discontinues viewing or averts his or her gaze and then reestablishes observation, thereby essentially refreshing the effect.

While there are numerous examples of static images that produce apparent motion, repeated asymmetric patterns typically generate the most striking illusions of apparent motion. Currently, there is no one single explanation as to what causes the various illusions and why not every individual responds in a predictable manner. Accordingly, even though the exact mechanism of action is not completely understood, it is believed that these illusions result primarily from a combination of fast and slow changes over time in the neuronal representation of contrast and/or luminance. In other words, an individual's eyes and brain work in concert to produce an image that is ultimately interpreted by the individual. By modifying the contrast and luminance to a greater extent, and the shape, color and size to a lesser extent, of a repeated asymmetric pattern, it is possible to produce static images that when viewed have the appearance of motion.

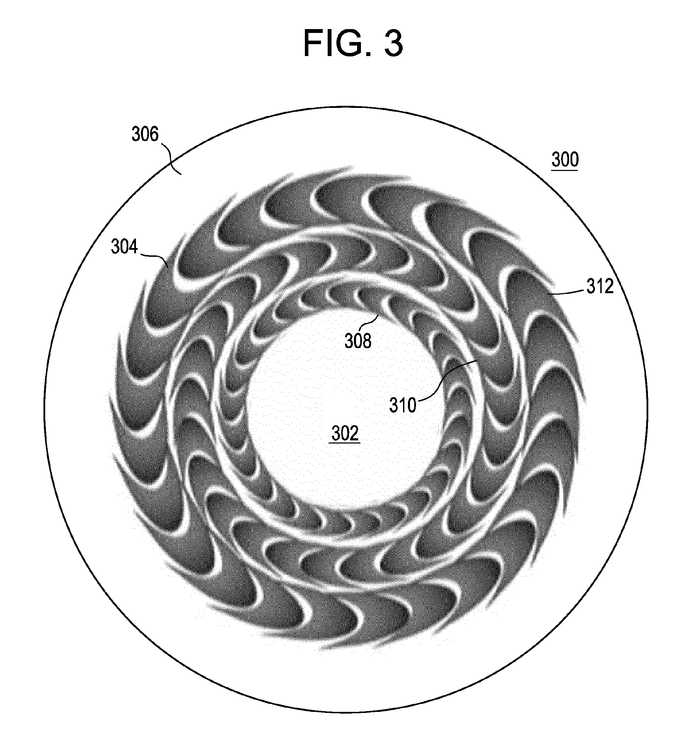

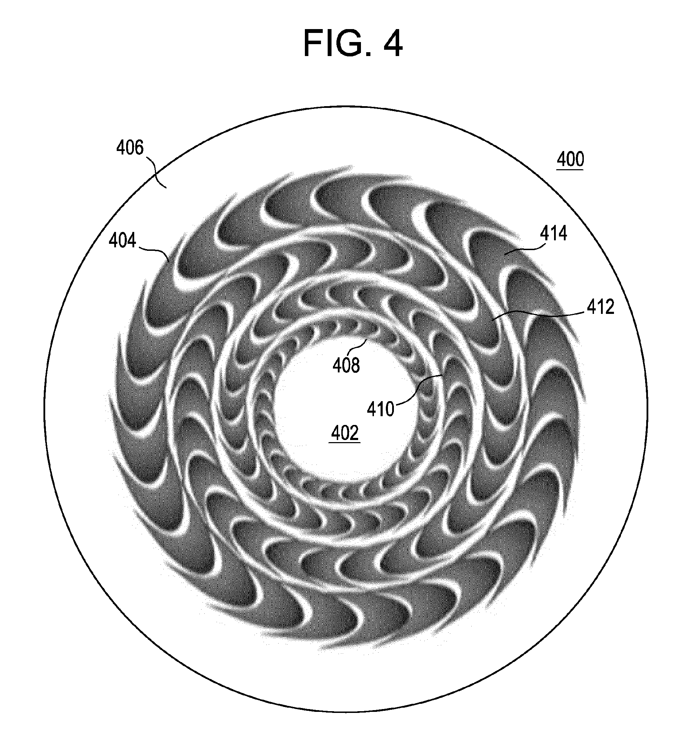

It is important to note that there are a number of optical illusions that create the appearance of motion that may be constructed and sized to fit on a contact lens; however, repeated asymmetric patterns are preferable. Figure 3 illustrates a first exemplary cosmetic contact lens 300 comprising a repeated asymmetric pattern having three rings 308, 310 and 312. The cosmetic contact lens 300 comprises a center region 302 that is sized to substantially correspond to the size and location of an individual's pupil. The center region 302 typically has no coloring or design so as not to interfere with visual acuity. A central portion 304 surrounds the center region 302 and is sized to substantially correspond to the size and location of an individual's iris. In this exemplary embodiment, the central portion 304 comprises the three rings 308, 310 and 312 of the repeated asymmetric pattern. Disposed about the central portion 304 and extending to the surrounding edge of the contact lens 300 is the peripheral portion 306. In this exemplary embodiment, the three rings 308, 310 and 312 of the repeated asymmetric pattern do not extend into the peripheral portion 306; however, in alternate exemplary embodiments, they may. Figure 4 illustrates a four ring pattern 408, 410, 412 and 414 also positioned in the central portion 404 and not the peripheral portion 406 or the center region 402; however, as stated above, any pattern may cover at least a portion of one or both of these portions of the contact lens.

Any suitable component shape with the appropriate contrast, luminance and colors may be utilized in accordance with the present invention. While a black and white static image, including gray scale, as illustrated in Figures 3 and 4 may not present or create the illusion of motion to all observers, the appropriate combination of elements described above will preferably create the illusion of apparent motion. In addition, not all observers will detect motion or apparent motion even if a color image with the appropriate level of contrast and/or luminance is utilized.

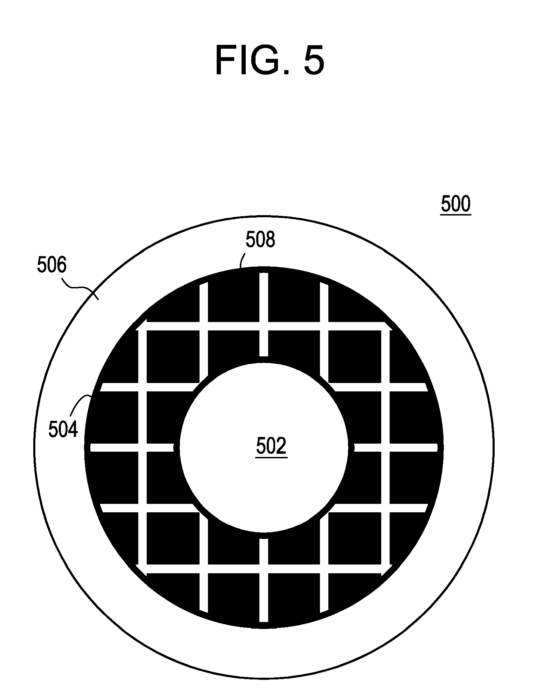

In accordance with another exemplary embodiment, a cosmetic contact lens may include a design that creates the illusion or visual effect of elements that seem to appear, disappear and then appear again. In this exemplary embodiment, there is no illusion of apparent motion, but rather the appearance and disappearance of an element that does not exist in reality. Referring to Figure 5, there is illustrated an exemplary cosmetic contact lens 500 comprising a grid pattern 508. If an individual stares at the pattern 508, dots appear and disappear at the intersections forming the grid pattern 508. Once again, the cosmetic contact lens 500 comprises a center region 502, a central portion 504 surrounding the center region 502 and a peripheral portion 506 which is disposed about the central portion 504 and extends to the surrounding edge of the contact lens 500. It is important to note that while the grid pattern 508 is formed with squares, any suitable geometric shape may be utilized.

As in the above described embodiments, the grid pattern 508 is in the central portion 504, but may be in any of the sections of the contact lens 500 other than the center region 502.

It is important to note that any of the above-referenced exemplary embodiments may be utilized with other effects, including the use of limbal rings and the brightening of the sclera.

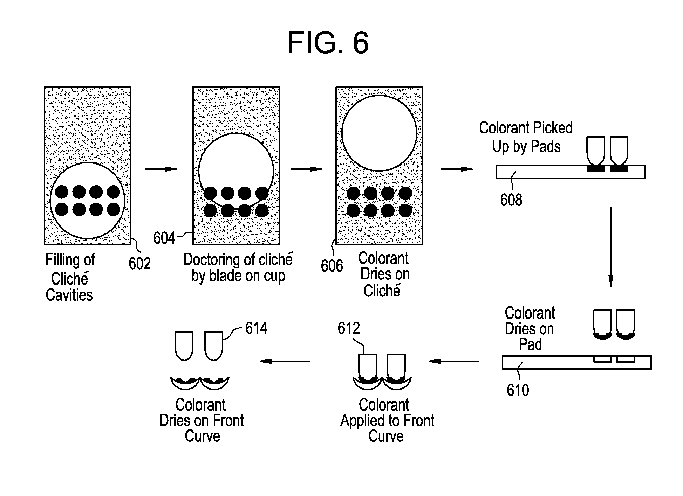

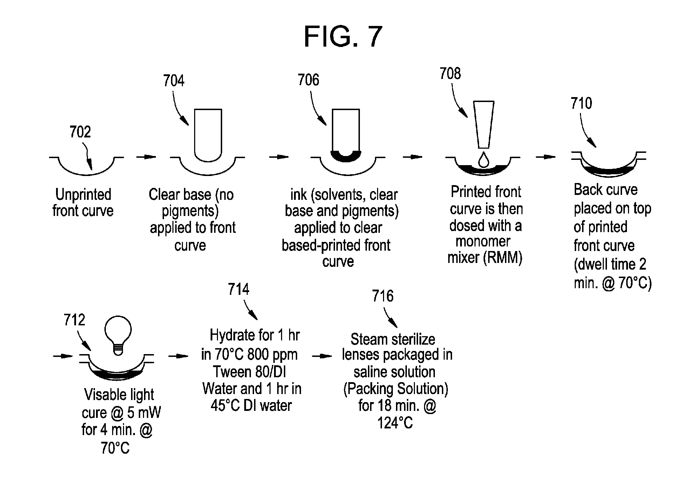

Typically, the designs/patterns/colors for the different regions of a cosmetic contact lens are developed based upon market research. The static images creating apparent motion in accordance with the present invention are no exception and the process of incorporating them into the lens is the same. These patterns are etched into metal structures generally referred to as a cliché. Once the clichés are fabricated, a multi-step process is utilized to manufacture the cosmetic contact lens as described below. Figure 6 illustrates a general overview of the pad printing process utilized in the manufacturing process. The first step, 602, in the process is filing of the cliché cavities with the desired colorant. The second step, 604, in the process involves the removal of excess ink from the surface of the clichés. Excess ink is typically removed from the surface of the clichés through the use of a doctoring blade or doctoring blades. In the third step, 606, of the process, the colorant is dried on the clichés. In the fourth step, 608, of the process, the colorant in the cliché's is picked up by pads. In the fifth step, 610, of the process, the colorant is dried or is allowed to dry on the pads. In the sixth step, 612, of the process, the colorant is transferred from the pads to the front curve surface wherein additional processing is performed as described below. In the seventh step, 614, of the process, the colorant is dried or is allowed to dry on the front curve surface of the front curve mold half. Additional steps may be required to complete a particular pattern involving multiple colors with different contrasts and luminance levels. Figure 7 provides a more detailed process description. In the first step, 702, an unprinted front curve mold for the contact lens is provided. In the second step, 704, a clear base, i.e. no pigment or dyes is applied to the front curve. In the third step, 706, ink, including solvents, clear base and pigments is applied to the clear base printed front curve. In the fourth step 708, the printed front curve is then dosed with a reactive monomer mixture, for example, etafilcon-A. Prior to the next step set forth herein, the above steps may once again be repeated to complete the pattern as described above. In the fifth step, 710, of the process, the back curve mold for the contact lens is positioned on the front curve mold where it remains for two (2) minutes while the temperature is maintained at seventy (70) degrees C. In the sixth step, 712, of the process, the reactive monomer mixture between the front and back curve is exposed to visible light for curing. This curing step utilizes visible light at five (5) mW for four (4) minutes at a temperature of seventy (70) degrees C. In the seventh step, 714, of the process the contact lens from the mold is hydrated for one (1) hour in seventy (70) degrees C solution of 800 ppm Tween 80 and de-ionized water and for an additional one (1) hour in forty-five (45) degree C de-ionized water. In the eighth step, 716, of the process, the contact lens is steam sterilized in its own packaged saline solution for eighteen (18) minutes at a temperature of one hundred twenty-four (124) degree C. It is important to note that the above-described process has been simplified for ease of explanation.

Although shown and described in what is believed to be the most practical and preferred embodiments, it is apparent that departures from specific designs and methods described and shown will suggest themselves to those skilled in the art and may be used without departing from the spirit and scope of the invention. The present invention is not restricted to the particular constructions described and illustrated, but should be constructed to cohere with all modifications that may fall within the scope of the appended claims.

## Claims

1. A contact lens, the contact lens comprising:
a center region;
a central portion surrounding the center region;
a peripheral portion surrounding the central portion; and
an image incorporated into the contact lens in at least a portion of at least one of the central portion and the peripheral portion, the image constructed to create a dynamic visual illusion in the mind of an observer gazing at a wearer of the contact lens.

2. The contact lens according to Claim 1, wherein the image comprises a repeated asymmetric pattern.

3. The contact lens according to Claim 2, wherein the repeated asymmetric pattern comprises a contrast driven repeated asymmetric pattern.

4. The contact lens according to Claim 2, wherein the repeated asymmetric pattern comprises a luminance driven repeated asymmetric pattern.

5. The contact lens according to Claim 1, wherein the image comprises a pattern configured to create one or more appearing/disappearing elements.

6. The contact lens according to Claim 1, further comprises a limbal ring.

7. The contact lens according to Claim 1, wherein the image is a pattern on or within the contact lens in at least a portion of at least one of the central portion and the peripheral portion, wherein the pattern comprises a grid of dark geometric shapes and light spaces between the geometric shapes.

8. A contact lens, the contact lens comprising:
a center region;
a central portion surrounding the center region;
a peripheral portion surrounding the central portion; and
a pattern on or within the contact lens in at least a portion of at least one of the central portion and the peripheral portion, wherein the pattern comprises a grid of dark geometric shapes and light spaces between the geometric shapes.

9. The contact lens according to Claim 7 or Claim 8, wherein the geometric shapes comprise squares.

10. A contact lens, the contact lens comprising:
a center region;
a central portion surrounding the center region;
a peripheral portion surrounding the central portion; and
an image incorporated into the contact lens in at least a portion of at least one of the central portion and the peripheral portion, the image comprising a repeated asymmetric pattern.

11. The contact lens according to Claim 10, wherein the repeated asymmetric pattern comprises a contrast driven repeated asymmetric pattern.

12. The contact lens according to Claim 10, wherein the repeated asymmetric pattern comprises a luminance driven repeated asymmetric pattern.
